Europäisches Patentamt

European Patent Office

Office européen des brevets

(11) Veröffentlichungsnummer: **0 229 615 B1**

# EUROPÄISCHE PATENTSCHRIFT

(45) Veröffentlichungstag der Patentschrift: **23.10.91**

(51) Int. Cl.⁵: **G01F 1/08**, G01F 1/12, G01F 15/02

(21) Anmeldenummer: **87100045.1**

(22) Anmeldetag: **03.01.87**

Die Akte enthält technische Angaben, die nach dem Eingang der Anmeldung eingereicht wurden und die nicht in dieser Patentschrift enthalten sind.

(54) **Volumenmesser.**

(30) Priorität: **13.01.86 DE 3600742**

(43) Veröffentlichungstag der Anmeldung:
**22.07.87 Patentblatt 87/30**

(45) Bekanntmachung des Hinweises auf die Patenterteilung:
**23.10.91 Patentblatt 91/43**

(84) Benannte Vertragsstaaten:
**AT BE CH FR LI NL**

(56) Entgegenhaltungen:
**DE-A- 2 202 033**
**US-A- 4 038 534**
**US-A- 4 306 457**

(73) Patentinhaber: **Hydrometer Gesellschaft mbH**
**Welserstrasse 13**
**W-8800 Ansbach(DE)**

(72) Erfinder: **Ziegler, Horst Prof. Dr.**
**Steinhauser Weg 13**
**W-4790 Paderborn(DE)**

(74) Vertreter: **Patentanwälte Dipl.-Ing. R. Splane-**
**mann Dr. B. Reitzner Dipl.-Ing. K. Baronetzky**
**Tal 13**
**W-8000 München 2(DE)**

Rank Xerox (UK) Business Services

EP 0 229 615 B1

**Beschreibung**

Die Erfindung betrifft einen Volumenmesser gemäß dem Oberbegriff von Anspruch 1.

Derartige Volumenmesser, die auch als Volumendurchflußmesser bezeichnet werden, sind aus der US-A-4 306 457 bekannt. Es ist ein freilaufender Oszillator sowie ein Diskriminatorzähler vorgesehen, wobei ein Fühler, der von einem Meßrad mit Impulsen beaufschlagt wird, den Diskriminatorzähler zurückstellt. Aus dem je erzielten Zählerstand des Diskriminatorzählers kann auf die Drehgeschwindigkeit des Meßrads geschlossen werden.

Zur Erhöhung der Genauigkeit wird der je ermittelte Zählerstand jedoch nicht unmittelbar ausgewertet, sondern als Adreßsignal für einen Korrekturspeicher verwendet, so daß eine Korrektur des ermittelten Meßwerts in Abhängigkeit von der Umdrehungsgeschwindigkeit des Meßrads - oder weiteren Faktoren - möglich ist.

Diese Art der Korrektur des Meßsignales ist zwar vom Prinzip her gut, jedoch recht aufwendig, zumal bei Durchflußmessern mit größeren Meßbereichen der Korrekturspeicher eine enorme Anzahl von Speicherzellen aufweisen müßte.

Aus diesen Gründen ist bei den derzeit verwendeten Volumenmessern zur Kompensation von Nichtlinearitäten das Vorsehen von Staurippen vorgesehen. Hierdurch läßt sich ebenfalls der Meßbereich vergrößern.

Andererseits ist die Anordnung von Staurippen vergleichsweise aufwendig, da die genaue Ausgestaltung nur empirisch festgelegt werden kann. Zudem bringen Staurippen stets die Gefahr von Ablagerungen mit sich und tragen auch zu erhöhten Herstellkosten des Volumenmessers bei.

Ferner ist aus der US-A-4 038 537 ein weiterer Volumenmesser bekannt. Bei diesem Stand der Technik wird eine Temperaturkompensation vorgenommen. Wenn die Temperaturkompensation mit der vorstehend angeführten Kompensation der Nichtlinearität kombiniert werden sollte, müßte eine noch erheblich gesteigerte Anzahl von Speicherzellen vorgesehen sein.

Demgegenüber liegt der Erfindung die Aufgabe zugrunde, einen Volumenmesser gemäß dem Oberbegriff von Anspruch 1 zu schaffen, der mit vergleichsweise geringem Aufwand auch bei einem großen Meßbereich vergleichsweise geringe Meßfehler sicherstellt.

Diese Aufgabe wird erfindungsgemäß durch einen Volumenmesser gemäß Anspruch 1 gelöst. Vorteilhafte Weiterbildungen ergeben sich aus den Unteransprüchen.

Bei dem erfindungsgemäßen Volumenmesser werden die Fühlerimpulse nicht direkt zur Ansteuerung einer Anzeige oder eines Zählers verwendet, vielmehr wird der zeitliche Abstand der Fühlerimpulse ausgewertet und ein Korrekturspeicher mit dem Impulsabstand zugeordneten Adressiersignalen beaufschlagt. In den Speicherzellen des Korrekturspeichers ist jeweils ein Korrektursignal abgelegt, welches zur Erstellung des Meßsignales verwendet wird. Es kann sich dabei um Signale handeln, welche entweder direkt dem Volumen zugeordnet sind, welches bei der betrachteten Drehzahl des Meßrads einem Fühlerimpuls entspricht, oder der Volumenkorrektur zugeordnet sind, die bei der gerade festgestellten Drehzahl an dem für eine Standard-Drehzahl geltenden Volumenwert angebracht werden muß.

Die im Korrekturspeicher abgelegten Korrektursignale werden experimentell ermittelt, wobei in der Regel eine einmalige Detail-Aufnahme der Kennlinie für einen bestimmten Typ des Volumenmessers durchgeführt wird und herstellungsbedingte Streuungen durch Anpassen der Typ-Kennlinie an mehrere Nacheichpunkte berücksichtigt werden.

Da bei dem erfindungsgemäßen Volumenmesser das Fühlerausgangssignal nicht mehr linear dem Meßvolumen zugeordnet zu sein braucht, kann man diesen über das Weglassen der Staurippen hinaus konsequent im Hinblick auf laminare Strömungsverhältnisse optimieren. Dies ist im Hinblick auf das Verhindern toter Winkel mit der dort bestehenden Gefahr der Abscheidung von Schmutz und im Hinblick auf möglichst geringe Drosselung des gemessenen Mediums von Vorteil. So kann man gemäß Anspruch 16 der Meßkammer eiförmigen transversalen Querschnitt geben, was im Hinblick auf die Führung des Mediums besonders vorteilhaft ist, bei herkömmlichen Volumenmessern aber im Hinblick auf die Anforderungen an den Meßfehler unmöglich ist. Auch kann man gemäß Anspruch 17 Einlaßkanal und Auslaßkanal großen Querschnitt geben, was wiederum Hinblick auf die Führung des zu messenden Mediums vorteilhaft ist und bei den herkömmlichen Volumenmessern im Hinblick auf den tolerierbaren Meßfehler ausgeschlossen ist.

Wie oben schon angedeutet, erfolgt bei einem erfindungsgemäßen Volumenmmesser die Berücksichtigung von Fertigungsstreuung durch einfache Anpassung einer Typ-Kennlinie an einigen wenigen Nacheichpunkten. Bei herkömmlichen Volumenmessern müssen dagegen bei Nenndurchfluß und maximalem sowie minimalem Durchfluß mechanische Abgleichelemente eingestellt werden. Hierbei müssen die Abgleichelemente iterativ mehrfach eingestellt werden, da die verschiedenen Verstellungen nicht voneinander unabhän-

2

gig sind. Dies bedeutet einen hohen Aufwand sowohl bei der Ersteichung als auch beim gesetzlich vorgeschriebenen Nacheichen in regelmäßigen Abständen.

Erfindungsgemäß ist es vorgesehen, daß der Korrekturspeicher insgesamt klein sein kann und trotzdem über einen großen Durchflußbereich die Umsetzung der Fühlerimpulse in das Meßsignal durchgeführt werden kann, wobei die relative Güte der Umsetzung über den gesamten Arbeitsbereich hinweg im wesentlichen konstant ist.

Bei Meßrad-Volumenmessern treten nicht nur vom Durchfluß abhängige Meßfehler sondern auch durch andere Arbeitsparameter bedingte Meßfehler auf. Hierzu gehören in erster Linie temperaturbedingte Meßfehler. Diese können bei herkömmlichen Volumenmessern in der Regel nur durch besondere Materialauswahl kleingehalten werden, was sowohl im Hinblick auf die reinen Materialkosten als auch im Hinblick auf die Fertigungskosten nachteilig ist. Bei hohen Anforderungen an den Meßfehler können bekannte Volumenmesser nur in einem beschränkten Temperaturbereich eingesetzt werden.

Bei einem erfindungsgemäßen Volumenmesser kann man auch Meßfehler, welche auf Änderungen in den äußeren Arbeitsbedingungen zurückzuführen sind, auf einfache Weise verhindern, indem man gemäß Anspruch 2 im Korrekturspeicher auch für diese verschiedenen zu erwartenden Arbeitsparameter entsprechende Sätze von Korrektursignalen im Korrekturspeicher ablegt und die mit diesen Sätzen belegten Speicherzellenfelder unter Verwendung einer Wähleinheit auswählt. Zum Adressieren einer Speicherzelle dienen dann zwei Teiladressen, von denen die das Feld vorgebende Teiladresse von der Wähleinheit bereitgestellt wird, während die eine spezifische Speicherzelle des angewählten Feldes bestimmende Teiladresse aus dem Abstand zweier aufeinanderfolgender Fühlerimpulse abgeleitet ist.

Bei einem Volumenmesser gemäß Anspruch 3 wird automatisch der Temperatur Rechnung getragen, bei welcher die Volumenmessung gerade erfolgt.

Bei einem Volumenmesser gemäß Anspruch 4 kann man durch Einstellen der Schalteranordnung unterschiedlichen Grundarbeitsbedingungen des Volumenmessers Rechnung tragen, z.B. unterschiedlicher Einbaugeometrie mit vertikaler oder horizontaler Drehachse des Meßrades.

Bei einem Volumenmesser gemäß Anspruch 5 ist gewährleistet, daß dann, wenn ein schwerer Fehler in demjenigen Geräteteil auftritt, welcher der Berücksichtigung eines zusätzlichen Arbeitsparameters dient, die Messung unter Zugrundelegung von Standard-Meßbedingungen weitergeführt wird.

Die Weiterbildung der Erfindung gemäß Anspruch 6 ist im Hinblick auf eine einfache Auswertung des Meßsignales von Vorteil. Dieses kann z.B. direkt auf die Zählklemme eines den Durchfluß aufintegrierenden Zählers gegeben werden, der entweder ein elektronischer Zähler oder ein Schrittmotor mit nachgeschaltetem mechanischen Zählerwerk sein kann.

Der im Anspruch 7 angegebene steuerbare Frequenzgenerator zeichnet sich durch besonders einfachen schaltungstechnischen Aufbau aus.

Die Weiterbildung der Erfindung gemäß Anspruch 8 ist im Hinblick auf die Verwendung der im wesentlichen gleichen Auswerteschaltung in Verbindung mit Meßkammern und Meßrädern unterschiedlicher Größe von Vorteil. Zur Berücksichtigung der unterschiedlichen Größe der mechanischen Teile des Volumenmessers brauchen nur die in den im Anspruch 8 angegebenen Speicherzellen enthaltenen Skalierungssignale abgeändert zu werden, wenn die Strömungsverhältnisse in den verschiedenen Meßkammern linear aufeinander abbildbar sind. Sollte dies nicht der Fall sein, so müssen auch die in den übrigen Speicherzellen abgelegten Kennlinien umgeändert werden; auch in diesem Falle bleibt aber die mit dem Korrekturspeicher verbundene Schaltung im übrigen unverändert.

Der im Anspruch 10 angegebene Rechenkreis hat besonders einfachen Aufbau und kann ganzzahlige Skalierungsfaktoren direkt berücksichtigen. Sollen mit ihm Skalierungen vorgenommen werden, die einem nicht ganzzahligen Skalierungsfaktor entsprechen, so wird der über den ganzzahligen Anteil hinausgehende Rest der Skalierung über entsprechende Gewichtung der Korrektursignale abgewickelt.

Mit der Weiterbildung der Erfindung gemäß Anspruch 11 wird erreicht, daß auch bei einer etwa durch Änderungen der Arbeitsbedingungen notwendig werdenden Umschaltung des Skalierungsfaktors keine im Hauptzähler aufgelaufenen Zählimpulse verlorengehen.

Mit der Weiterbildung der Erfindung gemäß Anspruch 12 wird ein besonders großer Einstellbereich des Skalierungsfaktors bei kleiner Größe des Hauptzählers erhalten.

Bei einem Volumenmesser gemäß Anspruch 14 wird auch dann noch die Messung fortgesetzt, wenn ein schwerwiegender Fehler im Impulsabstandsdiskriminator, im Korrekturspeicher oder dem mit dem Datenausgang des letzteren verbundenen Schaltungsteil auftritt. Unter derartigen Bedingungen arbeitet der Volumenmesser so, wie wenn keine Fehlerkorrektur vorgesehen wäre.

Die Weiterbildung der Erfindung gemäß Anspruch 15 ist im Hinblick auf das Kleinhalten des mittleren Meßfehlers beim Auftreten einer derartigen erheblichen Störung in der Erstellung der Korrektursignale von Vorteil.

3

Nachstehend wird die Erfindung anhand von Ausführungsbeispielen unter Bezugnahme auf die Zeichnung näher erläutert. In dieser zeigen:

Figur 1: einen axialen Schnitt durch einen Flügelrad-Volumenmesser;

Figur 2: eine Aufsicht auf den Volumenmesser nach Figur 1, wobei einige Teile weggebrochen sind;

Figur 3: ein Blockschaltbild des Volumenmessers nach Figur 1 und 2;

Figur 4: das Schaltbild eines quasilogarithmischen Zählers, wie er im Blockschaltbild nach Figur 3 Verwendung findet; und

Figur 5: das Blockschaltbild eines abgewandelten Volumenmessers.

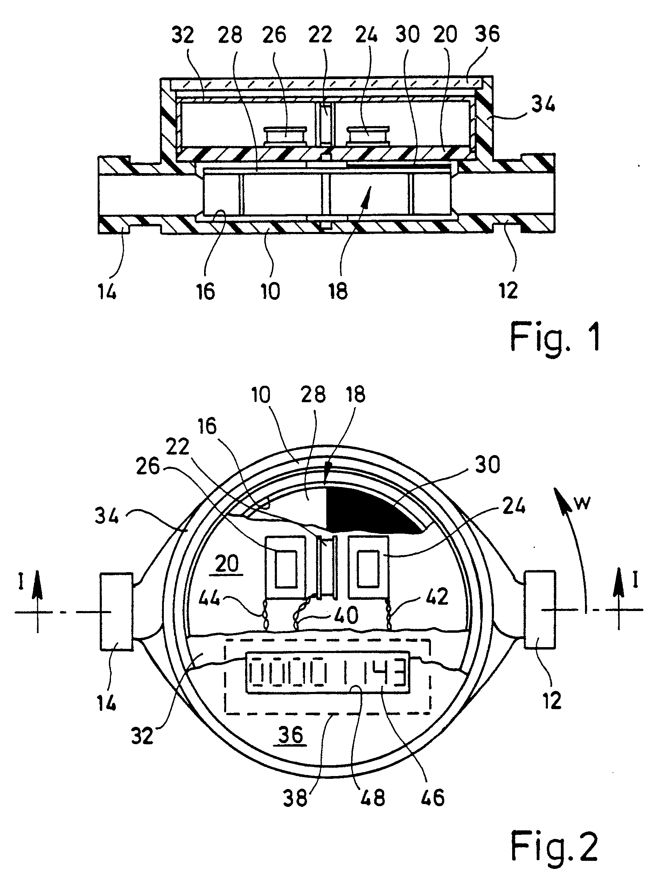

Der in den Figuren 1 und 2 wiedergegebene Volumenmesser hat ein Gehäuse 10 mit einem Einlaßstutzen 12 und einem Auslaßstutzen 14. Diese münden beide außermittig in eine Meßkammer 16 ein, in welcher ein Flügelrad 18 umläuft. Letzteres ist im Boden des Gehäuses 10 und einem Meßkammerdeckel 20 gelagert, der seinerseits dicht in das Gehäuse 10 eingesetzt, z.B. eingeklebt oder eingeschweißt ist.

Der Meßkammerdeckel trägt auf seiner Oberseite eine Sendespule 22, welche der Drehachse des Flügelrades 18 benachbart auf der in Figur 2 obenliegenden Hälfte des Meßkammerdeckels 20 so ausgerichtet angebracht ist, daß ihre Symmetrieebene die Flügelrad-Drehachse schneidet.

Zu beiden Seiten der Sendespule 22 sind eine erste Empfängerspule 24 bzw. eine zweite Empfängerspule 26 angeordnet, wobei deren Mittelebene parallel zum Meßkammerdeckel 20 verläuft und deren Spulenachsen mit der Spulenachse der Sendespule 22 eine gemeinsame Ebene aufspannen. Die Spulen sind dicht nebeneinander angeordnet, wobei die Radiusstrahlen von der Flügelrad-Drehachse zu den Mittelpunkten der Empfängerspulen 24, 26 einen Winkel von 90° einschließen.

Da die Achsen der Empfängerspulen 24, 26 senkrecht auf der Achse der Sendespule 22 stehen, ist die magnetische Kopplung zwischen der Sendespule und den Empfängerspulen im Nahfeld groß.

Das Flügelrad 18 hat ein scheibenförmiges Stirnteil 28, welches auf der Oberseite zur Hälfte mit einer dünnen Kupferschicht bedeckt ist. Letztere ist ihrerseits durch einen dünnen nicht näher gezeigten Schutzfilm vollständig überzogen.

Eine becherförmige Abschirmung 32 ist in Figur 1 von oben über die durch die Sendespule 22 und die Empfängerspulen 24, 26 gebildete Spulenanordnung gestülpt. Ein durchsichtiger Deckel 36 schließt die Umfangswand 34 ab.

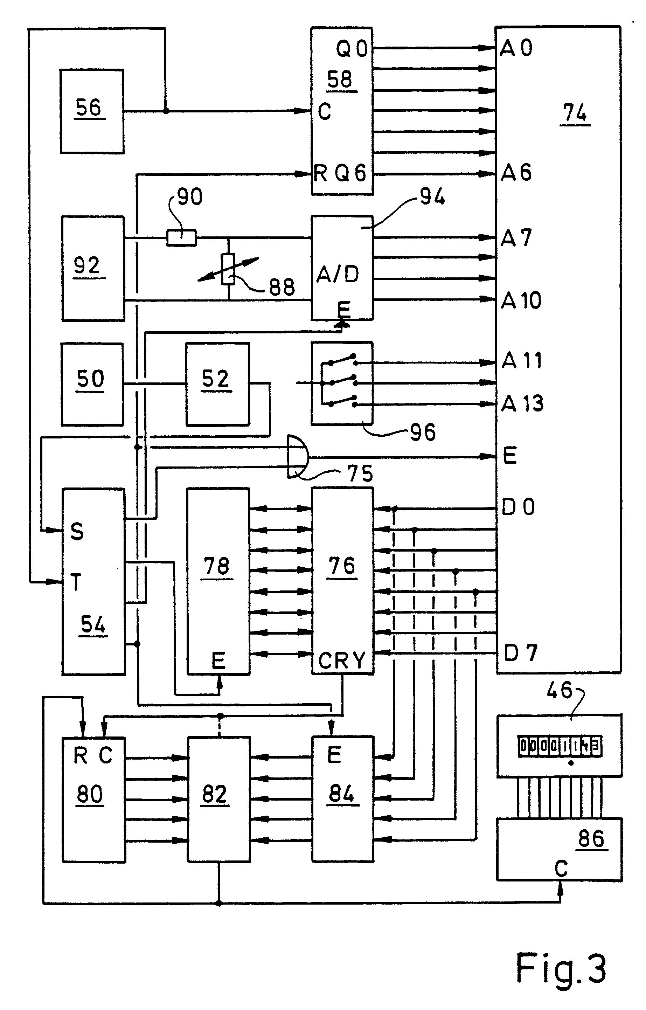

Der Meßkammerdeckel 20 trägt ferner eine Elektronikeinheit 38, mit welcher die Sendespule 22 über ein Kabel 40, die Empfängerspulen 24, 26 über weitere Kabel 42 und 44 verbunden sind. Die Elektronikeinheit 38 enthält neben einer Versorgungsbatterie und später unter Bezugnahme auf Figur 3 noch näher zu erläuternden Schaltkreisen eine LCD-Segmentanzeige 46, die durch ein Fenster 48 in der Abschirmung 32 und durch den Deckel 36 abgelesen werden kann.

Strömt bei eingebautem Durchflußmesser Wasser vom Einlaßstutzen 12 zum Auslaßstutzen 14, so wird durch dieses Wasser das Flügelrad 18 mitgenommen. Üblicherweise erhält man für einen Durchsatz von 1 l 30 Umdrehungen des Flügelrades 18.

Bei den Drehungen des Flügelrades 18 wird die halbkreisförmige Kupferschicht 30 entsprechend mitgenommen.

Die Gegenwart elektrisch leitenden Materiales in unmittelbarer Nähe einer Spule hat bei Beaufschlagung derselben mit einem Wechselspannungssignal die Folge, daß zur Induktivität der betrachteten Spule zusätzlich eine Kurzschlußwindung parallel geschaltet ist. Durch die Drehung des Flügelrades 18 erhält man somit eine Modulation der Induktivität der beiden Empfängerspulen 24, 26, und durch einen geeigneten Signalformkreis, der in Einzelheiten in der DE-OS 35 19 215 beschrieben ist, kann man die ansteigende und/oder die abfallende Flanke des Induktivitätsverlaufes in einen Impuls umsetzen.

Im Blockschaltbild nach Figur 3 sind die Sendespule 22, die beiden Empfängerspulen 24, 26, zusammen mit diesen Resonanzkreise bildende Kondensatoren sowie ein Wechselspannungsgenerator in einem block 50 zusammengefaßt, dem ein Signalformkreis 52 nachgeschaltet ist. Für die nachstehende Beschreibung sei angenommen, daß die durch den Fühler 50 und den Signalformkreis 52 gebildete Fühleinheit für jede volle Umdrehung des Flügelrades 18 genau einen Fühlimpuls erzeugt.

Die Fühlimpulse werden auf den Signaleingang S eines Ablaufsteuerkreises 54 gegeben. Dieser führt jeweils nach Erhalt eines Fühlimpulses eine vorgegebene Arbeitsfolge herbei, wie nachstehend noch genauer beschrieben wird. Für diese Ablaufsteuerung erhält er ferner an einer Taktklemme T das Ausgangssignal eines freilaufenden Oszillators 56, der bei einem praktischen Ausführungsbeispiel mit einer Frequenz von 256 Hz arbeitet.

Der Ausgang des Oszillators 56 ist ferner mit der Zählklemme C eines quasilogarithmischen Zählers 58 verbunden, dessen Rückstellklemme R von einem der Ausgänge des Ablaufsteuerkreises 54 her beaufschlagt wird, wenn letzterer einen Fühlimpuls erhält. Der maximale Zählerstand des Zählers 58 ist somit ein Maß für den zeitlichen Abstand zweier aufeinanderfolgender Fühlimpulse.

4

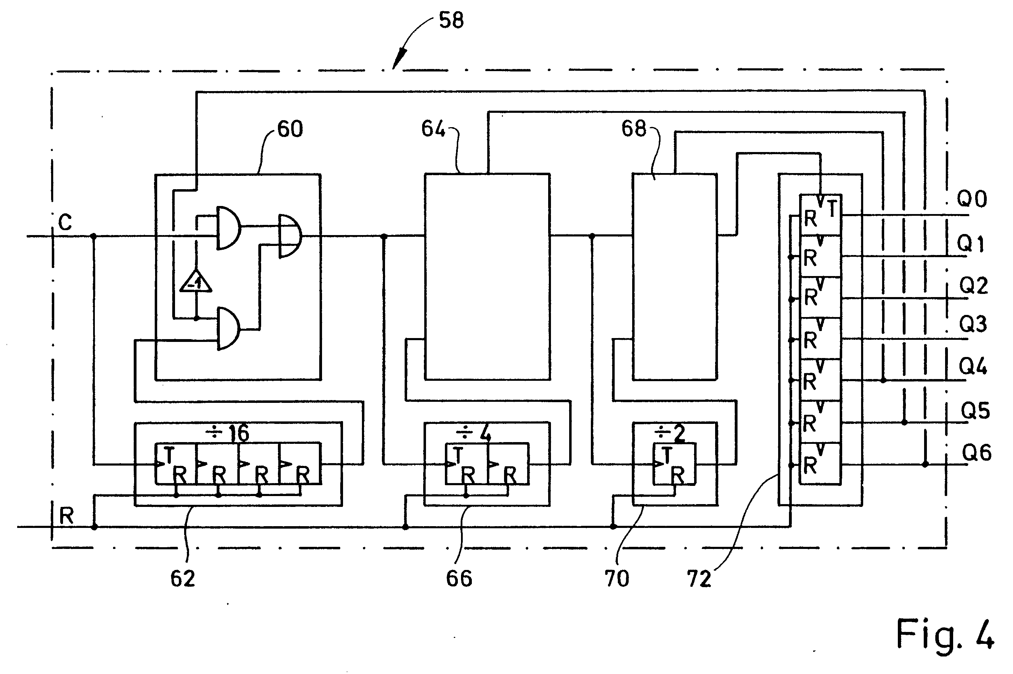

Figur 4 zeigt Einzelheiten des quasilogarithmischen Zählers 58, der ein (4 + 3)-Bit-Zähler ist.

Die Zählklemme C des Zählers 58 ist direkt mit dem einen Eingang eines ersten steuerbaren Umschalters 60 verbunden, dessen zweiter Eingang des durch einen 4-Bit-Zähler 62 um den Faktor 16 heruntergeteilte Signal an der Zählklemme C erhält.

Der Ausgang des Umschalters 60 ist direkt mit dem einen Eingang eines zweiten steuerbaren Umschalters 64 verbunden. Ein zweiter Eingang des letzteren erhält über einen 2-Bit-Zähler 66 das um den Faktor 4 heruntergeteilte Ausgangssignal des ersten Umschalters 60.

Der Ausgang des zweiten steuerbaren Umschalters 64 ist direkt mit der einen Eingangsklemme eines dritten steuerbaren Umschalters 68 verbunden, dessen zweite Eingangsklemme über einen einstelligen Zähler 70 das um den Faktor 2 heruntergeteilte Ausgangssignal des zweiten Umschalters 64 erhält.

Das Ausgangssignal des dritten Umschalters 68 gelangt auf die Taktklemme eines 7-Bit-Zählers 72, dessen Ausgangsklemmen mit Q 0 bis Q 6 bezeichnet sind.

Wie aus Figur 4 ersichtlich, ist die Ausgangsklemme Q 4 des Zählers 70 mit der Steuerklemme des dritten Umschalters 68, die Ausgangsklemme Q 5 mit der Steuerklemme des zweiten Umschalters 64 und die Ausgangsklemme Q 6 mit der Steuerklemme des ersten Umschalters 60 verbunden. Damit wird insgesamt erreicht, daß der Zähler 70 mit stufenweise logarithmisch abnehmender Empfindlichkeit die an der Zählklemme C des quasilogarithmischen Zählers 58 erhaltenen Zählimpulse berücksichtigt. Wie aus Figur 4 ersichtlich, sind die Rückstellklemmen der Zähler 62, 66, 70 und 72 sämtliche mit der Rückstellklemme R des quasilogarithmischen Zählers 58 verbunden.

Bezeichnet man die Periode des Oszillators 56 mit T (in der Praxis 1/256-sec.), so ergibt sich zwischen dem Stand des Zählers 72 und der seit dem letzten Rückstellen des quasilogarithmischen Zählers 58 verflossenen Zeit t und dem der Erhöhung des Standes des Zählers 72 um die Zahl eins entsprechenden Zeitinkrement folgender Zusammenhang:

| Zählerstand | Zeitinkrement (Tsec) | Zeit (T sec) | Zeit (sec) |
|---|---|---|---|
| 0...15 | 1 | 0...15 | 0.0000...0.0586 |
| 16...31 | 2 | 16...46 | 0.0625...0.1797 |
| 32...47 | 4 | 48...108 | 0.1875...0.4219 |
| 48...63 | 8 | 112...232 | 0.4375...0.9063 |
| 64...79 | 16 | 240...480 | 0.9375...1.8750 |
| 80...95 | 32 | 496...976 | 1.8750...3.8125 |
| 96...111 | 64 | 1008...1968 | 3.9375...7.6875 |
| 112...127 | 128 | 2032...3952 | 7.9375...15.4375 |

Man erkennt, daß mit dem nur 7 Bits aufweisenden Zähler 72 aufgrund der quasilogarithmischen Vorteilung der auf ihn gegebenen Zählimpulse ein großer Zeitbereich überstrichen werden kann, wobei in den verschiedenen Teilbereichen im wesentlichen die gleiche relative zeitliche Auflösung erzielt wird. Da die Rückstellklemme R des quasilogarithmischen Zählers 58 von dem Ablaufsteuerkreis 54 jeweils dann mit Signal beaufschlagt wird, wenn das Flügelrad 18 eine vorgegebene Stellung erreicht und da somit der maximale Zählerstand des Zählers 72 umgekehrt proportional zur Winkelgeschwindigkeit des Flügelrades 18 ist, kann man unter Verwendung des quasilogarithmischen Zählers 58 auch die Winkelgeschwindigkeit des Flügelrades 18 in einem sehr großen Bereich mit im wesentlichen konstanter relativer Genauigkeit messen.

Der zur Winkelgeschwindigkeit des Flügelrades 18 umgekehrt proportionale Maximalstand des Zählers 58 wird zur Erzeugung eines drehzahlkorrigierten Meßsignales verwendet, wozu die Ausgangsklemmen Q 0 bis Q 6 des quasilogarithmischen Zählers 58 mit Adressklemmen A 0 bis A 6 eines Korrekturspeichers 74 verbunden sind. Letzterer hat eine Aktivierungsklemme E, die zu einem vorgegebenen Zeitpunkt des Meßzyklus vom Ablaufsteuerkreis 54 mit Signal beaufschlagt wird. Zu diesem Zeitpunkt stellt der Korrekturspeicher 74 an Datenausgangsklemmen D 0 bis D 7 ein korrigiertes Meßsignal bereit, welches in der durch die Signalkombination an den Adreßklemmen A 0 bis A 6 ausgewählten Speicherzelle des Korrekturspeichers 74 abgelegt ist. Dieses korrigierte Meßsignal stellt dasjenige Volumen dar, welches bei der betrachteten Drehzahl des Flügelrades 18 de facto durch den Volumenmesser strömt. Die entsprechenden Volumenwerte sind für diejenigen Winkelgeschwindigkeiten des Flügelrades 18, die den verschiedenen möglichen Zählerständen des Zählers 72 entsprechen, durch punktweise Eichung unter Zuhilfenahme eines Standard-Volumenmessers ermittelt worden und sind im Korrekturspeicher 74 abgelegt. Letzterer ist ein Lesespeicher (ROM), z.B. ein EPROM.

Die Datenausgangsklemmen D 0 bis D 7 des Korrekturspeichers 74 sind mit den einen Eingängen eines 8-Bit-Addierers 76 verbunden. Dessen zweite Eingänge und dessen Ausgang sind mit einem Akkumulator 78 verbunden, dessen Aktivierungsklemme E zu einem vorgegebenen Zeitpunkt des Meßzyklus von dem Ablaufsteuerkreis 54 her mit Signal beaufschlagt ist.

Die Überlaufklemme CRY des Addierers 76 ist mit der Zählklemme C eines zweiten quasilogarithmischen Zählers 80 verbunden. Letzterer ist ein (2 + 3)-Zähler, der analogen Aufbau aufweist wie der in Figur 4 gezeigte (4 + 3)-Bit-Zähler: die drei höchstrangigen Bits dienen zur Ansteuerung dreier Umschalter, deren einen Eingangsklemmen progressiv abnehmendes Teilverhältnis aufweisende Frequenzteiler vorgeschaltet sind. Während aber bei dem quasilogarithmischen Zähler nach Figur 4 der Zähler 72 ein 7-Bit-Zähler ist, bei welchem die vier niederrangigsten Bits nicht zur Ansteuerung von Umschaltern verwendet werden, ist der entsprechende Zähler des quasilogarithmischen Zählers 80 nur ein 5-Bit-Zähler, wobei nur die beiden niederrangigsten Bits nicht zur Ansteuerung von Umschaltern dienen.

Die Ausgangsklemmen des quasilogarithmischen Zählers 80 sind mit den einen Eingangsklemmen eines Vergleichers 82 verbunden, dessen zweite Eingangsklemmen mit dem Ausgang eines Speichers 84 verbunden sind. Letzterer übernimmt dann, wenn seine Aktivierungsklemme E von dem Ablaufsteuerkreis 54 her mit Signal beaufschlagt ist, das auf den Datenausgangsklemmen D 0 bis D 5 des Korrekturspeichers 74 stehende Signal. Wie aus Figur 3 ersichtlich, erfolgt die Aktivierung des Speichers 84 gleichzeitig mit dem Rücksetzen des quasilogarithmischen Zählers 58, also zu einem Zeitpunkt, an den an den Adressklemmen A 0 bis A 6 die Adresse "0000000" liegt. Diese Adresse entspricht einer Umdrehungszeit des Flügelrades 18, die kleiner ist als eine Periode des Oszillators 56, beim oben angesprochenen praktischen Ausführungsbeispiel also einer Umdrehungszeit des Flügelrades 18 von weniger als 3,9 ms. Eine derartig hohe Drehzahl des Flügelrades 18 liegt außerhalb des Arbeitsbereiches des Volumenmessers und kommt daher in der Praxis nicht vor. In die entsprechende Speicherzelle des Korrekturspeichers 74 kann daher zusätzliche Information eingespeichert werden, welche bei der Erzeugung des Meßsignales von Nutzen sein kann. Beim hier betrachteten Ausführungsbeispiel ist dies die Anzahl von Umdrehungen des Flügelrades 18, die zur Abgabe eines Meßsignalimpulses führen soll. Diese Zahl wird somit vom Speicher 84 bei Aktivierung durch den Ablaufsteuerkreis 54 eingelesen, da die Aktivierungsklemme E des Korrekturspeichers 74 über ein ODER-Glied 75 auch mit dem Rückstellsignal für den Zähler 58 beaufschlagt ist.

Der Vergleicher 82 erzeugt an seinem Ausgang jeweils dann einen Impuls, wenn der Stand des quasilogarithmischen Zählers 80 mit dem am Ausgang des Speichers 84 stehenden Skalierungssignal übereinstimmt. Dieser Meßimpuls wird auf die Zählklemme eines den gesamten Durchfluß aufintegrierenden Meßzählers 86 gegeben, der mit der Segmentanzeige 46 zusammenarbeitet. Das Ausgangssignal des Vergleichers 82 dient zugleich zum Rückstellen des quasilogarithmischen Zählers 80.

Der soeben beschriebene Teil des in Figur 3 gezeigten Blockschaltbildes dient zur Korrektur der Drehzahlabhängigkeit des vom Flügelrad 18 jeweils pro Umdrehung hindurchgelassenen Meßvolumens des zu messenden Mediums. Eine derartige Drehzahlabhängigkeit ist - wie oben schon dargelegt - deshalb gegeben, weil weder in der Meßkammer 16 noch am Flügelrad 18 strömungstechnische Maßnahmen getroffen sind, um Änderungen in den Strömungsverhältnissen zu kompensieren, welche sich bei änderndem Durchfluß durch den Volumenmesser ergeben, insbesondere aufgrund des Übergangs von laminaren zu turbulenten Strömungsverhältnissen.

Der Ablaufsteuerkreis 54 steuert einen Meßzyklus grob gesprochen wie folgt: Wird ein Fühlimpuls vom Signalformkreis 52 erhalten, so wird zuerst über den zweiten Eingang des ODER-Gliedes 75 der Korrekturspeicher 74 aktiviert, und letzterer stellt an seinen Datenausgängen D 0 bis D 7 das der momentanen Signalkombination an den Adressklemmen A 0 bis A 6 anstehenden Signalkombination, also dem momentanen Stand des quasilogarithmischen Zählers 58 zugeordnete Korrektursignal bereit. Nun wird die Aktivierungsklemme E des Akkumulators 78 mit Signal beaufschlagt, und dieser speichert die vom Addierer 76 berechnete Summe aus der Summe aller vorhergehenden Korrektursignale und dem neuen Korrektursignal ab. Tritt bei dieser Summenbildung ein Überlauf des Addierers 76 auf, wird der Stand des quasilogarithmischen Zählers 80 um 1 erhöht.

Anschließend wird vom Ablaufsteuerkreis 54 der quasilogarithmische Zähler 58 zurückgestellt, und letzterer beginnt zur neuerlichen Bestimmung der Umlaufzeit des Flügelrades 18 wieder von unten zu zählen.

Läge ein in seinen mechanischen Teilen idealer Volumenmesser vor, bei dem ungeachtet des Durchflusses jede Umdrehung des Flügelrades 18 einem konstanten Meßvolumen entspräche, so wären in

EP 0 229 615 B1

dem Korrekturspeicher 74 sämtliche Speicherzellen mit einer Adresse, die größer als 0 ist, mit der (binären) Zahl "11111111" zu belegen. Bei jedem einmal in einem Meßzyklus vorkommenden Hinzuaddieren des neuen korrigierten Meßsignales durch den Addierer 76 erfolgt dann ein Überlauf des Addierers 76, und der Stand des quasilogarithmischen Zählers 80 ist dann direkt der Anzahl der Umdrehungen des Flügelrades 18 zugeordnet. Der Speicher 84 und der Vergleicher 82 teilen im Effekt den Stand des quasilogarithmischen Zählers 80 um denjenigen Faktor herunter, welcher in denjenigen Speicherzellen des Korrekturspeichers 74 abgelegt ist, die durch Beaufschlagung der Adreßklemmen A 0 bis A 6 mit der Zahl "0000000" ausgelesen werden. Der Zähler 80 ersetzt somit in Verbindung mit dem Vergleicher 82 und dem Speicher 84 ein mechanisches Untersetzungsgetriebe, welches dem eigentlichen Zählwerk (Meßzähler 86, Segmentanzeige 46) vorgeschaltet ist.

Bei einem keine strömungstechnischen Hilfsmittel enthaltenden realen Volumenmesser steigt dagegen das pro Umdrehung des Flügelrades 18 durch den Volumenmesser strömende Elementarvolumen stark mit der Drehzahl des Flügelrades an. Zur Korrektur werden in den Speicherzellen des Korrekturspeichers 74 sich gegensinnig ändernde Korrektursignale abgelegt: Geht man von dem eingangs angesprochenen Beispiel eines im Durchflußbereich von 3 l/h bis 10.000 l/h einsetzbaren Volumenmessers für fFüssigkeiten aus, bei welchem bei einem Durchfluß von 10.000 l/h ein Anzeigefehler von +80 % vorliegt, der zur unteren Grenze des Durchflußbereiches kontinuierlich abnimmt, so werden in die Speicherzellen des Korrekturspeichers 74 beginnend mit der der Adresse "0000001" Korrektursignale abgelegt, welche beginnend von der Dezimalzahl 142 (100/180 x 256) entsprechend analog bis zur Zahl 256 anwachsen, die in der Speicherzelle mit der Adresse "1111111" abgelegt wird. Der genaue Verlauf der Korrektur-Kennlinie wird unter Verwendung eines Eich-Volumenmessers für die verschiedenen Drehzahl-Stützpunkte experimentell ermittelt.

In Figur 3 sind noch weitere Schaltungsteile gezeigt, die zur Korrektur weiterer Meßfehler dienen, die beispielsweise durch die Arbeitstemperatur des Volumenmessers, seine Einbaulage und andere Arbeitsparameter bedingt sein können.

Zur Messung der Arbeitstemperatur des Volumenmessers ist ein temperaturabhängiger Widerstand 88 vorgesehen, welcher in Reihe mit einem Festwiderstand 90 über die Klemmen einer Gleichspannungsquelle 92 geschaltet ist. An den temperaturabhängigen Widerstand 88 ist ein Analog/Digitalwandler 94 angeschlossen, dessen Ausgangsklemmen mit weiteren Adreßklemmen A 7 bis A 10 des Korrekturspeichers 74 verbunden sind. Der Analog/Digitalwandler 94 wird vom Ablaufsteuerkreis 54 einmal pro Meßzyklus oder jeweils nach einer vorgegebenen Anzahl von Meßzyklen aktiviert.

Über die an den Adreßklemmen A 7 bis A 10 anliegende Teiladresse kann man somit verschiedene Felder des Korrekturspeichers 74 aktivieren, die jeweils durch die an den Adreßklemmen A 0 bis A 6 anstehende Teiladresse durchfahren werden. In jedem dieser Felder ist eine Korrekturkennlinie abgelegt, welche der der momentanen Teiladresse A 7 - A 10 zugeordneten Arbeitstemperatur entspricht. Dabei sind vorzugsweise in denjenigen Feldern, deren Teiladressen A 7 - A 10 dann erhalten werden, wenn im Temperaturmeßkreis ein Kurzschluß oder eine Leitungsunterbrechung auftritt, mit mittleren Arbeitsbedingungen entsprechenden Korrektursignalsätzen belegt, so daß bei schwerwiegenden Störungen in der Temperaturmeßeinrichtung automatisch auf eine Messung bei Standardbedingungen umgeschaltet wird.

Weitere Adreßklemmen A 11 bis A 13 des Korrekturspeichers 74 sind mit einer Mehrfach-Schalteranordnung 96 verbunden, um in unterschiedlichen Ebenen abgelegte Temperatur/Drehzahl-korrigierte Meßsignalsätze ansprechen zu können. Durch die jeweils gewählte Stellung der einzelnen Schalter der Schalteranordnung kann man z.B. unterschiedlicher Einbaulage des Volumenmessers oder auch unterschiedlichen Typen des Fühlers 50 Rechnung tragen.

Bei dem als Blockschaltbild in Figur 3 gezeigten Volumenmesser kann man die Meßkammer 16 mit eiförmigem transversalen Querschnitt ausbilden und auch die übrige Kammergeometrie und die Geometrie des Flügelrades 18 ausschließlich im Hinblick auf optimale Strömungsverhältnisse wählen, da die durch eine solche Optimierung eingeführten starken Änderungen des pro Umdrehung des Flügelrades 18 durchgelassenen elementaren Meßvolumens mit der Drehzahl des Flügelrades und der Temperatur auf elektronische Weise unter geringem baulichem Aufwand in weiten Grenzen präzise kompensiert werden können.

Wie sich an sich schon aus dem obenstehenden Beschreibungsteil ergibt, läuft der Addierer 76 dann nicht bei jedem Meßzyklus über, wenn er vom Korrekturspeicher 74 her mit korrigierten Meßsignalen beaufschlagt ist, die einer Dezimalzahl < 255 entspricht. Der quasilogarithmische Zähler 80 läuft dann ebenfalls entsprechend langsamer hoch, um den bei höherer Drehzahl von der Geometrie der Meßkammer 16 und des Flügelrades 18 her bedingten positiven Anzeigefehler zu kompensieren.

Bei dem in Figur 3 als Blockschaltbild gezeigten Volumenmesser kann man auch eine nicht geradzahlige Untersetzung der Umdrehungen des Flügelrades in auf den Meßzähler 84 gegebene Impulse dadurch realisieren, daß man den keiner geraden Zahl entsprechenden Restanteil des Teilverhältnisses mit in die im

7

Korrekturspeicher 74 abgelegten Korrektursignale packt.

Wird der Volumenmesser in einem sehr großen Temperaturbereich verwendet, kann es auch notwendig werden, den Teilfaktor, um welchen der Zähler 80 zusammen mit dem Vergleicher 82 und dem Speicher 84 die Umdrehungen des Flügelrades herabsetzt, zu ändern. Unter extremen Bedingungen könnte dann durch Herabsetzen des Inhaltes des Speichers 84 ein Zustand auftreten, bei dem der Stand des Zählers 80 größer ist als das im Speicher 84 bereitgestellte Vergleichssignal. Um dem zu begegnen, kann der Vergleicher 82 so ausgebildet werden, daß er bei positiver Differenz zwischen dem Stand des Zählers 80 und dem Inhalt des Speichers 84 eine entsprechende Anzahl von Zählimpulsen zusätzlich auf den Meßzähler 86 gibt oder nach dem Rückstellen des Zählers 80 sofort wieder auf dessen Zählklemme C gibt, wie in Figur 3 durch eine gestrichelte zusätzliche Ausgangsleitung zu dieser Zählklemme angedeutet.

Ein praktisches Ausführungsbeispiel des oben beschriebenen Volumenmessers macht bei maximalem Durchfluß bis zu 30 Umdrehungen/sec. Bei einer Arbeitsfrequenz des Oszillators 56 von 256 Hz führt dies gerade zum Zählerstand "0000001" des quasilogarithmischen Zählers 58. Bei Minimaldurchfluß ist dagegen die Zeit für eine Umdrehung des Flügelrades 18 16 Sekunden, und innerhalb dieser Zeitspanne läuft der Zähler 58 bis auf "1111111" hoch. Bei insgesamt 128 Stützpunkten für eine Korrektur-Kennlinie hat man somit einen Dynamikbereich von insgesamt 50000:1.

Da jede der Speicherzellen des Korrekturspeichers 74 beim praktischen Ausführungsbeispiel 8 Bit breit ist, läßt sich das Volumen mit einer Genauigkeit von besser als 0,5 % korrigieren, wobei der Nichtlinearitätsfehler der mechanischen Teile des Volumenmessers bis zu 70 % betragen kann.

In der Nachbarschaft maximalen Durchflusses entspricht die zeitliche Auflösung des Zählers 58 der Periode des Oszillators 56, beim betrachteten praktischen Ausführungsbeispiel etwa 4 ms. Man hat also eine hohe zeitliche Auflösung, mit welcher der nur schwachen Variation der Korrekturkennlinie als Funktion des Durchflusses genügend genau Rechnung getragen werden kann. Eine ähnliche relative Genauigkeit der Bestimmung der Umlaufzeit des Flügelrades 18 hat man in der Nachbarschaft minimalen Durchflusses, wobei - wie schon dargelegt - für jede Korrekturkennlinie nur 128 Stützpunkte benötigt werden. Bei rein linearer Bestimmung der Umlaufzeit des Flügelrades 18 würde der Zähler 58 einen maximalen Zählerstand von 4096 erreichen, und entsprechend groß müßte die Anzahl der Speicherzellen für eine Korrekturkennlinie gewählt werden. Bei der oben beschriebenen Ausbildung des Zählers 58 läßt sich mit nur 128 Speicherzellen in jedem Zeitbereich eine näherungsweise konstante relative Zeitauflösung von etwa 5 % erreichen, was wegen des kontinuierlichen Verlaufes der Korrekturkennlinie auch bei insgesamt großen Nichtlinearitäten der mechanischen Teile des Volumenmessers von weit über 50 % immer noch eine Korrektur auf einen Endfehler von besser als 1 % ermöglicht.

Während die Korrektursignalsätze für einen bestimmten Typ des Volumenmessers durch Eichung an einer entsprechenden Anzahl von Stützstellen ermittelt wird, kann man fertigungsbedingte Streuungen der einzelnen Volumenmesser einer Serie unter Verwendung eines Abgleichautomaten berücksichtigen, der die mit dem Einzelexemplar an drei Stützstellen erhaltenen Meßergebnisse mit Sollwerten vergleicht und anhand dieses Vergleiches die gesamte Kennlinie modifiziert. Dies kann entweder so erfolgen, daß an einer zusätzlichen Anzahl von Stützstellen ein Vergleich der Meßergebnisse durchgeführt wird, oder auch so, daß ausgehend von wenigen Stützstellen durch Interpolation die übrigen Stützstellen berechnet werden. In jedem Falle programmiert der Abgleichautomat dann den Korrekturspeicher 74 unter Berücksichtigung der individuellen Eigenschaften des betrachteten Volumenmessers.

Bei dem oben beschriebenen Ausführungsbeispiel ist an den temperaturabhängigen Widerstand 88 ein 4-Bit-Analog/Digitalwandler 94 angeschlossen. Üblicherweise ändert sich die Kennlinie eines Volumenmessers pro 10 K Temperaturänderung um etwa 1 bis 2 %. Im Hinblick auf die üblichen Genauigkeitsanforderungen an Volumenmesser für Flüssigkeiten genügt es also, die Temperatur auf etwa 5 - 10 K genau zu bestimmen. Der in Figur 3 wiedergegebene 4-Bit-Analog/Digitalwandler kann 16 unterschiedliche Temperaturintervalle umsetzen, so daß man insgesamt einen Temperatur-Arbeitsbereich von 80 K erhält, welcher bei einem Wasserzähler zum Beispiel den Temperaturbereich von 0 - 80° C überdecken kann. Für die den verschiedenen unterscheidbaren Temperaturen zugeordneten Kennlinien braucht man somit insgesamt 16 x 128 Speicherzellen, also ingesamt 2048 Speicherzellen. Speicherbausteine der Größe 2048 x 8 Bit werden in großen Stückzahlen gefertigt und sind preisgünstig erhältlich.

Es versteht sich, daß man die zu unterscheidenden Temperaturintervalle auch größer oder kleiner wählen kann, indem man einen temperaturabhängigen Widerstand 88 mit anderem Temperaturgang auswählt, so daß man bei gleichem Analog/Digitalwandler 94 insgesamt einen größeren oder kleineren Temperaturarbeitsbereich erhält. Die verschiedenen Temperatur-Kennlinien werden entweder alle auf einem Eichstand ermittelt oder durch Interpolation aus wenigen Temperatur-Kennlinien ermittelt.

Durch die beim oben beschriebenen Volumenmesser durch geringen Mehraufwand erhaltene Möglichkeit der Berücksichtigung der Arbeitstemperatur, kann man auf einfache Weise der Dichte des zu messenden Mediums Rechnung tragen, so daß der Flügelrad-Volumenmesser über einen weiten Temperaturbereich hin auch als Massenmesser eingesetzt werden kann.

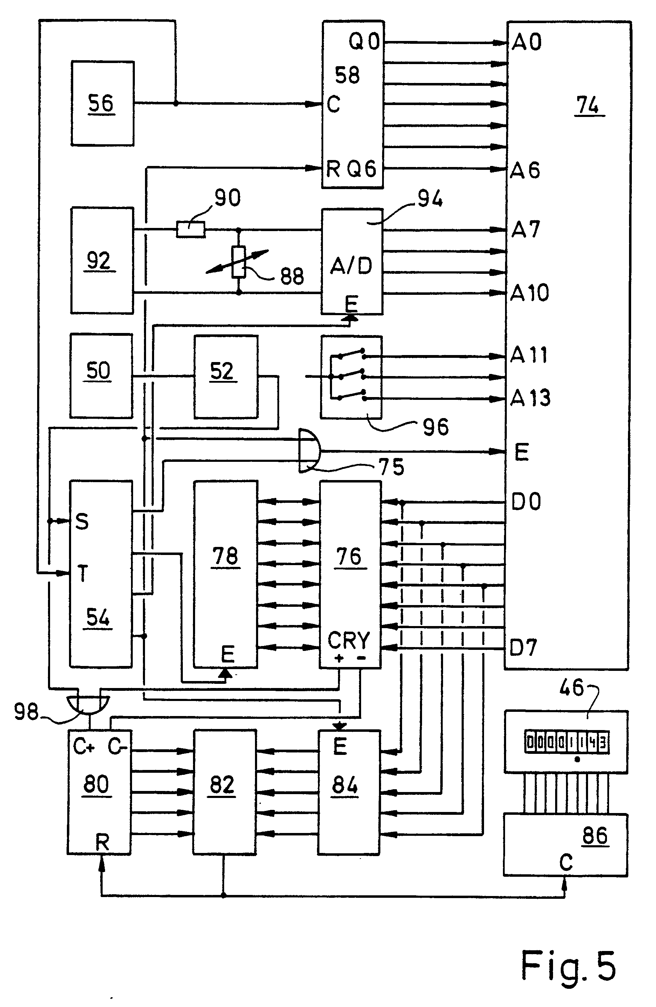

Bei dem oben beschriebenen Ausführungsbeispiel wird für jeden Meßzyklus das im Hinblick auf Temperatur und Flügelraddrehzahl korrigierte Meßvolumen ermittelt und aufsummiert. Stattdessen kann man auch die Fühlerimpulse direkt aufsummieren und parallel hierzu die Summe der für die einzelnen Meßzyklen vorzunehmenden Korrekturen bilden und beide Summen laufend zusammenfassen. Ein entsprechendes abgewandeltes Ausführungsbeispiel zeigt Figur 5. Schaltungsteile, die obenstehend unter Bezugnahme auf Figur 3 schon erläutert wurden, sind wieder mit denselben Bezugszeichen versehen und werden nicht noch einmal detailliert beschrieben.

Der quasilogarithmische Zähler 80 ist als Auf/Abzähler ausgebildet. Seine Aufwärtszählklemme C + ist über ein ODER-Glied 98 direkt mit den vom Signalformkreis 52 bereitgestellten Fühlimpulsen beaufschlagt.

Die im Korrekturspeicher 74 abgelegten Korrektursignale sind so normiert, daß bei einer Standard-Arbeitstemperatur und der am häufigsten vorkommenden Arbeitsdrehzahl des Volumenmessers keine Korrekturen vorgenommen zu werden brauchen. Je nachdem, zu welcher Seite dieses Standard-Arbeitspunktes der Volumenmesser gerade arbeitet, enthalten dann die verschiedenen Speicherzellen des Korrekturspeichers positive oder negative Korrektursignale, die zu den vom Signalformkreis 52 abgegebenen Fühlimpulsen hinzuaddiert werden müssen, um die systemeigenen Fehler der mechanischen Teile des Volumenmessers zu kompensieren. Der Addierer 76 ist eingangsseitig somit entweder mit positiven oder negativen Korrektursignalen beaufschlagt und kann im Verlauf mehrerer Meßzyklen dann in positiver oder negativer Richtung überlaufen. Die entsprechenden Überlaufimpulse werden an Überlaufklemmen CRY + bzw. CRY- bereitgestellt. Die Überlaufklemme CRY + ist mit der zweiten Eingangsklemme des ODER-Gliedes 98 verbunden; die Überlaufklemme CRY- des Addierers 76 beaufschlagt die Abwärtszählklemme C-des quasilogarithmischen Zählers 80. Das Ausgangssignal des Zählers 80 entspricht somit demjenigen des Zählers 80 beim Ausführungsbeispiel nach Figur 3, und auch die weitere Signalverarbeitung (elektronische Untersetzung der Flügelraddrehzahl) erfolgt gleich wie unter Bezugnahme auf Figur 3 beschrieben.

In Abwandlung des oben beschriebenen Ausführungsbeispieles kann das Flügelrad ein Turbinenrad sein, welches in einer dann axial durchströmten Meßkammer angeordnet ist. Auch andere in einer Meßkammer umlaufende Meßräder sind verwendbar; Korrekturen bezüglich der Linearität des Volumenmessers lassen sich auch bei derart in ihren mechanischen Teilen abgewandelten Volumenmessern in der oben im einzelnen beschriebenen Art und Weise einfach bewerkstelligen.

Bei in ihren mechanischen Teilen schon vorliegenden herkömmlichen Volumenmessern mit strömungstechnischen Einbauten zur Erzielung kleiner Meßfehler kann man von der Erfindung zusätzlich Gebrauch machen, um den Meßbereich zu erweitern, insbesondere zu kleinen Durchsätzen hin.

## Patentansprüche

1. Volumenmesser, mit einem Gehäuse, in welchem eine Meßkammer, ein zu dieser führender Einlaßkanal und ein von der Meßkammer wegführender Auslaßkanal ausgebildet sind, mit einem in der Meßkammer (16) umlaufenden, Flügel tragenden Meßrad (18), mit einem Fühler, welcher gemäß dem Vorbeilaufen des Meßrads (18) Fühlerimpulse bereitstellt, und mit einem mit den Fühlerimpulsen beaufschlagbaren Impulsabstandsdiskriminator, mit welchem ein dem zeitlichen Abstand aufeinanderfolgender Fühlerimpulse zugeordnetes Ausgangssignal erzeugbar ist und der einen freilaufenden Oszillator (56) und einen Diskriminatorzähler (58) aufweist, dessen Zähl-Eingangsanschluß mit dem Ausgang des Oszillators (56) verbunden ist und dessen Rücksetzeingang in Abhängigkeit von den Fühlerimpulsen mit einem Signal beaufschlagbar ist, und mit einem Korrekturspeicher (74), in dessen Speicherzellen unterschiedlichen Drehzahlen des Meßrads (18) zugeordnete Korrektursignale für die Erstellung des Meßsignals abgelegt sind und der in Abhängigkeit vom Ausgangssignal des Impulsabstandsdiskriminators über Adreß-Eingangsanschlüsse (A0 - A6) adressierbar ist, wobei die Meßkammer (16) und das Meßrad (18) von Staurippen frei sind, welche zur Einstellung eines im wesentlichen durchfluß unabhängigen Meßergebnisses dienen, dadurch **gekennzeichnet,** daß der Diskriminatorzähler (58) als quasilogarithmischer Zähler ausgebildet ist.

2. Volumenmesser nach Anspruch 1, dadurch gekennzeichnet, daß weitere Adreß-Eingangs anschlüsse (A7 - A13) mit Ausgängen einer Wähleinheit (88 - 96) verbunden sind und in den den verschiedenen Ausgangssignalen der Wähleinheit (88 - 96) zugeordneten Speicherzellenfeldern jeweils ein Satz von Korrektursignalen abgelegt ist.

3. Volumenmesser nach Anspruch 2, dadurch gekennzeichnet, daß die Wähleinheit einen an das zu messende Medium thermisch angekoppelten Temperaturfühler aufweist, der vorzugsweise einen analogen Temperatursensor (88) und einen nachgeschalteten Analog/Digitalwandler (94) umfaßt.

4. Volumenmesser nach Anspruch 2 oder 3, dadurch gekennzeichnet, daß die Wähleinheit eine einstellbare Schalteranordnung (96) umfaßt.

5. Volumenmesser nach einem der Ansprüche 2 bis 4, dadurch gekennzeichnet, daß in Speicherzellenfeldern, welche denjenigen Teiladressen zugeordnet sind, die bei einem Kurzschluß oder einer Leitungsunterbrechung in der Wähleinheit (88 - 96) von der letzteren bereitgestellt werden, Korrektursignale abgelegt sind, welche eine Standard-Korrekturkennlinie darstellen.

6. Volumenmesser nach einem der Ansprüche 1 bis 5, gekennzeichnet durch einen steuerbaren Frequenzgenerator (76 - 84), dessen Steuereingang mit den vom Korrekturspeicher (74) bereitgestellten Korrektursignalen beaufschlagbar ist.

7. Volumenmesser nach Anspruch 6, dadurch gekennzeichnet, daß der steuerbare Frequenzgenerator einen Addierer (76) sowie einen in Abhängigkeit von den Fühlimpulsen getakteten Akkumulator (78) aufweist, wobei der eine Eingang des Addierers mit den Datenausgängen des Korrekturspeichers (74) und der andere Eingang sowie der Ausgang des Addierers (76) mit dem Akkumulator (78) verbunden sind und wobei die Überlaufklemme (CRY) des Addiereres (76) die Generatorausgangsklemme darstellt.

8. Volumenmesser nach einem der Ansprüche 1 bis 7, dadurch gekennzeichnet, daß in denjenigen Speicherzellen, welche jeweils der mit dem Fühlimpulsabstand Null zugeordneten Teiladresse entsprechen, Skalierungssignale abgelegt sind; daß diese Skalierungssignale mit dem ersten Einschalten des Volumenmessers oder jeweils zu Beginn oder Ende eines Meßzyklus oder einer vorgegebenen Anzahl von Meßzyklen ausgelesen werden und in einem Rechenkreis (82, 84) mit den aus dem Korrekturspeicher (74) ausgelesenen Korrektursignalen verknüpft werden.

9. Volumenmesser nach Anspruch 8, dadurch gekennzeichnet, daß der Rechenkreis eine Zählschaltung (76 - 80), einen mit dem Datenausgang des Korrekturspeichers (74) verbundenen Skalierungsspeicher (84) sowie einen Vergleicher (82) aufweist, wobei letzterer jeweils dann einen Ausgangsimpuls bereitstellt, wenn das Ausgangssignal der Zählschaltung (76 - 80) mindestens gleich dem Ausgangssignal des Skalierungsspeichers (74) ist.

10. Volumenmesser nach Anspruch 9, dadurch gekennzeichnet, daß die Zählschaltung einen mit den Korrektursignalen beaufschlagten Vorzähler (76 , 80) und einen mit dessen Überlaufsignalen beaufschlagten Hauptzähler (80) aufweist und daß der Hauptzähler (80) in Abhängigkeit vom Ausgangssignal des Vergleichers (82) zurückgestellt wird.

11. Volumenmesser nach Anspruch 10, dadurch gekennzeichnet, daß der Vergleicher (82) zusätzlich zu dem bei Erreichen der Gleichheit seiner Eingangssignale bereitgestellten Ausgangssignal eine Anzahl von weiteren Ausgangsimpulsen bereitstellt, die der Differenz zwischen dem Ausgangssignal des Hauptzählers (80) und dem Ausgangssignal des Skalierungsspeichers (84) entspricht, wobei diese zusätzlichen Impulse entweder nach Rückstellen des Hauptzählers (80) auf dessen Zählklemme zurückgegeben werden oder zusätzlich auf der Ausgangsklemme des Vergleichers (82) bereitgestellt werden.

12. Volumenmesser nach Anspruch 10 oder 11, dadurch gekennzeichnet, daß der Hauptzähler (80) ein quasilogarithmischer Zähler ist.

13. Volumenmesser nach einem der Ansprüche 6 bis 12, dadurch gekennzeichnet, daß die Korrektursignale den korrigierten Elementarvolumen zugeordnet sind und ein Meßzähler (86) mit dem Ausgangssignal des steuerbaren Frequenzgenerators (76 - 88) beaufschlagt ist.

14. Volumenmesser nach einem der Ansprüche 6 bis 12, dadurch gekennzeichnet, daß die Korrektursignale den Volumenskorrekturen zugeordnet sind und die Ausgangssignale des steuerbaren Frequenzgenerators (76 - 88) unter Verwendung eines ODER-Gliedes (98) mit den vom Fühler (50) bereitgestellten Fühlimpulsen zusammengefaßt werden.

**15.** Volumenmesser nach Anspruch 14, dadurch gekennzeichnet, daß die Korrektursignale denjenigen Volumenskorrekturen zugeordnet sind, welche bezüglich eines Standardarbeitspunktes des Volumenmessers vorzunehmen sind; und daß der steuerbare Frequenzgenerator einen Auf/Abzähler (80) aufweist, dessen einer Eingang über das ODER-Glied (98) mit den Fühlimpulsen und positiven Korrekturimpulsen beaufschlagt ist, während seine Abwärtszählklemme negative Korrekturimpulse erhält.

**16.** Volumenmesser nach einem der Ansprüche 1 bis 15, dadurch gekennzeichnet, daß die Meßkammer (16) eiförmigen transversalen Querschnitt hat.

**17.** Volumenmesser nach einem der Ansprüche 1 bis 16, dadurch gekennzeichnet, daß der Einlaßkanal (12) und der Auslaßkanal (14) großen Querschnitt aufweisen.

## Claims

**1.** Volume flow meter, having a casing forming a measuring chamber, an inlet channel leading to said chamber, and an outlet channel leading away from said measuring chamber, further having a measuring wheel (18) rotating in said measuring chamber (16) and carrying vanes, further having a sensor for providing sensor pulses according to the passing of the measuring wheel (18), and further having a pulse interval discriminator which may be provided with said sensor pulses, for providing an output signal being in relationship to the time interval between successive sensor pulses, and comprising a free oscillating oscillator (56) and a discriminator counter (58) having a counter input connected to the output of the oscillator (56) and having a reset input to be provided with a signal responsive to the sensor pulses, and further having a correction storage means (74) having storage cells for receiving correction signals being in relation to different speeds of the measuring wheel (18), for producing the measuring signal, and which correction storage means may be addressed responsive to the output signal of the pulse interval discriminator via address inputs (A0 - A6), where the measuring chamber (16) and the measuring wheel (18) are free from obstruction ribs serving for adjusting a measuring result generally independent of flow, **characterized** in that the discriminator counter (58) is a quasi-logarithmic counter.

**2.** Volume flow meter according to claim 1, characterized in that further address inputs (A7 - A13) are connected to outputs of a selector unit (88 to 96), and that a set of correction signals is stored in the storage cell array being in relation to the different output signals of the selector unit (88 to 96), respectively.

**3.** Volume flow meter according to claim 2, characterized in that the selector unit comprises a temperature sensor thermally coupled to the medium to be measured and preferably comprising an analog temperature sensor unit (88) and a subsequent analog/digital-converter (94).

**4.** Volume flow meter according to claim 2 or 3, characterized in that the selector unit comprises an adjustable switch arrangement (96).

**5.** Volume flow meter according to one of the claims 2 to 4, characterized in that correction signals are stored in storage cell arrays being in relation to those partial addresses which are provided by the selector unit in the case of a short circuit or a line interruption within the selector unit (88 to 96), which correction signals represent a standard correction curve.

**6.** Volume flow meter according to one of the claims 1 to 5, characterized by a controlled frequency generator (76 to 84) having a control input for being supplied with correction signals provided by the correction storage means (74).

**7.** Volume flow meter according to claim 6, characterized in that the controlled frequency generator comprises an adder (76) and an accumulator being stepped responsive to said sensor pulses, with one input of the adder being connected to the data output of the correction storage means (74) and the other input and the output of the adder (76) being connected to the accumulator (78), and where the overflow terminal (CRY) of the adder (76) represent the generator output terminal.

8. Volume flow meter according to one of the claims 1 to 7, characterized in that scaling signals are stored in the storage cells corresponding to the partial address being in relation to the sensor pulse interval zero; that these scaling signals are read out when first starting the volume flow meter, or, at the beginning or at the end of a measuring cycle or a predetermined number of measuring cycles, and are tied up with the correction signals read out from the correction storage means (74) in a computing circuit (82, 84).

9. Volume flow meter according to claim 8, characterized in that the computing circuit comprises a counter circuitry (76 to 80), a scaling storage means (84) connected to the data output of the correction storage means (74) and a comparator (82), with the latter supplying an output pulse when the output signal of the counter circuitry (76 to 80) is at least equal to the output signal of the scaling storage means (84).

10. Volume flow meter according to claim 9, characterized in that the counter circuitry comprises a precounter (76, 80) supplied with the correction signals, and a main counter (80) supplied with the overflow signals thereof, and that the main counter (80) is reset responsive to the output signal of the comparator (82).

11. Volume flow meter according to claim 10, characterized in that the comparator (82), additionally to the output signal provided when equity of its input signals is obtained, provides a number of further output pulses corresponding to the difference between the output signal of the main counter (80) and the output signal of the scaling storage means (84), with these additional pulses being fed back to the counting terminal thereof after resetting the main counter (80) or being provided additionally on the output terminal of the comparator (82).

12. Volume flow meter according to claim 10 or 11, characterized in that the main counter (80) is a quasi-logarithmic counter.

13. Volume flow meter according to one of the claims 6 to 12, characterized in that the corrections signals are in relation to corrected elementary volumina, and a measuring counter (86) is supplied with the output signal of the controlled frequency generator (76 to 88).

14. Volume flow meter according to one of the claims 6 to 12, characterized in that the correction signals are in relation to the volume corrections, and that the output signals of the controlled frequency generator (76 to 88) are combined with the sensor pulses provided by the sensor (50) using an OR gate (98).

15. Volume flow meter according to claim 14, characterized in that the correction signals are in relation to those volume corrections which are to be achieved regarding a standard working point of the volume flow meter, and that the controlled frequency generator comprises an up/down-counter (80) one input of which is supplied with sensor pulses and positive correction pulses via the OR gate (98) while its down counting terminal receives negative correction pulses.

16. Volume flow meter according to one of the claims 1 to 15, characterized in that the measuring chamber (16) has an egg-shaped transverse cross-section.

17. Volume flow meter according to one of the claims 1 to 16, characterized in that the inlet channel (12) and the outlet channel (14) have a large cross-section.

## Revendications

1. Débitmètre, avec un boîtier dans lequel sont formés une chambre de mesure, un canal d'entrée menant à celle-ci et un canal de sortie menant hors de la chambre de mesure, avec une roue mesureuse (18) portant des ailettes, tournant dans la chambre de mesure (16), avec un capteur qui délivre des impulsions de détection selon le passage de la roue mesureuse (18), et avec un discriminateur d'écart d'impulsions pouvant recevoir les impulsions du capteur, avec lequel un signal de sortie correspondant aux impulsions de capteur se suivant dans l'intervalle temporel peut être produit et qui présente un oscillateur libre (56) et un compteur discriminateur (58), dont le raccord d'entrée de comptage est relié à la sortie de l'oscillateur (56) et dont l'entrée de remise à la valeur initiale peut recevoir un signal en fonction des impulsions de capteur, et avec une mémoire de correction (74), dans les cellules de mémoire de laquelle des signaux de correction correspondant à différents nombres de tours de la roue mesureuse (18) sont entrés pour l'établissement du signal de mesure et qui peut être adressée en fonction du signal de sortie du discriminateur d'écart d'impulsions par l'intermédiaire de raccords d'entrée d'adresse (A 0 - A 6), la chambre de mesure (16) et la roue mesureuse (18) étant dépourvues de nervures de retenue, qui servent à l'établissement d'un résultat de mesure essentiellement indépendant du débit, caractérisé en ce que le compteur discriminateur (58) est conçu comme un compteur quasilogarithmique.

2. Débitmètre selon la revendication 1, caractérisé en ce que d'autres raccords d'entrée, d'adresse (A7 - A13) sont reliés avec des sorties d'une unité de sélection (88 - 96) et qu'une phrase de signaux de correction est entrée dans chacun des champs de cellules de mémoire correspondant aux différents signaux de sortie de l'unité de sélection (88 - 96).

3. Débitmètre selon la revendication 2, caractérisé en ce que l'unité de sélection présente un capteur de température couplé de manière thermique avec le fluide à mesurer, qui comporte de préférence un palpeur de température analogique (88) et un convertisseur analogique/numérique (94) monté en aval.

4. Débitmètre selon la revendication 2 ou 3, caractérisé en ce que l'unité de sélection comporte un dispositif de disjoncteur (96).

5. Débitmètre selon l'une quelconque des revendications 2 à 4, caractérisé en ce que dans les champs de cellules de mémoire qui correspondent aux adresses partielles qui sont délivrées lors d'un court-circuit ou d'une interruption de la conduction dans l'unité de sélection (88 - 96) par cette dernière, des signaux de correction sont entrés qui représentent une caractéristique de correction standard.

6. Débitmètre selon l'une quelconque des revendications 1 à 5, caractérisé en ce qu'il possède un générateur de fréquences manoeuvrable (76 - 84), dont l'entrée de commande peut recevoir des signaux de correction délivrés par la mémoire de correction (74).

7. Débitmètre selon la revendication 6, caractérisé en ce que le générateur de fréquences manoeuvrable présente un additionneur (76) ainsi qu'un accumulateur (78) rythmé en fonction des impulsions de détection, une entrée de l'additionneur étant reliée aux sorties de données de la mémoire de correction (74) et l'autre entrée ainsi que la sortie de l'additionneur (76) avec l'accumulateur (78) et la borne de dépassement (CRY) de l'additionneur (76) représentant alors la borne de sortie du générateur.

8. Débitmètre selon l'une quelconque des revendications 1 à 7, caractérisé en ce que dans les cellules de mémoire qui équivalent chacune à l'adresse partielle correspondant à l'écart d'impulsions zéro sont entrés des signaux de cadrage ; que ces signaux de cadrage sont lus lors de la première activation du débitmètre ou lors de chaque début ou fin d'un cycle de mesure ou d'un nombre prédéterminé de cycles de mesure et sont associés dans un circuit de calcul (82,84) aux signaux de correction lus dans la mémoire de correction (74).

9. Débitmètre selon la revendication 8, caractérisé en ce que le circuit de calcul présente un circuit de comptage (76-80), une mémoire de cadrage (84) reliée à la sortie de donnée de la mémoire de correction (74) ainsi qu'un comparateur (82), ce dernier délivrant une impulsion de sortie chaque fois que le signal de sortie du circuit de comptage (76-80) est au moins égal au signal de sortie de la mémoire de cadrage (84).

10. Débitmètre selon la revendication 9, caractérisé en ce que le circuit de comptage présente un compteur préliminaire (76,80) recevant les signaux de correction et un compteur principal (80) recevant les signaux de dépassement de celui-ci et que le compteur principal (80) est ramené à sa valeur initiale en fonction du signal de sortie du comparateur (82).

11. Débitmètre selon la revendication 10, caractérisé en ce que le comparateur (82) délivre outre le signal délivré lorsque ses signaux d'entrée atteignent l'égalité un nombre d'autres impulsions de sortie qui correspond à la différence entre le signal de sortie du compteur principal (80) et le signal de sortie de

13

la mémoire de cadrage (84), ces impulsions supplémentaires étant soit renvoyées après que le compteur principal (80) a été ramené à sa valeur initiale sur ses bornes de comptage, soit délivrées en outre sur la borne de sortie du comparateur (82).

12. Débitmètre selon la revendication 10 ou 11, caractérisé en ce que le compteur principal (80) est un compteur quasi-logarithmique.

13. Débitmètre selon l'une quelconque des revendications 6 à 12, caractérisé en ce que les signaux de correction correspondent aux volumes élémentaires corrigés et qu'un compteur de mesure (86) reçoit le signal de sortie du générateur de fréquences manoeuvrable (76-88).

14. Débitmètre selon l'une quelconque des revendications 6 à 12, caractérisé en ce que les signaux de correction correspondent aux corrections de volume et les signaux de sortie du générateur de fréquences manoeuvrable (76-88) sont réunies en utilisant un élément OU (98) avec les impulsions de détection produites par le capteur (50).

15. débitmètre selon la revendication 14, caractérisé en ce que les signaux de correction correspondent aux corrections de volume qui doivent être effectuées de préférence pour un point de fonctionnement standard du débitmètre ; et que le générateur de fréquences manoeuvrable présente un compteur croissant/décroissant (80) dont une entrée reçoit par l'intermédiaire de l'élément OU (98) les impulsions de détection et les impulsions de correction positives, alors que sa borne de comptage décroissant reçoit des impulsions de correction négatives.

16. Débitmètre selon l'une quelconque des revendications 1 à 15, caractérisé en ce que la chambre de mesure (16) a une section transversale ovoïde.

17. Débitmètre selon l'une quelconque des revendications 1 à 16, caractérisé en ce que le canal d'entrée (12) et le canal de sortie (14) ont une grande section transversale.

32  28  26  22  24  30  20  36

34

14  16  10  18  12

# Fig. 1

10  28  18

16

22

26

30

34

W

I

20

24

44  42

I

40

14

12

0000143

32

36

38  48  46

# Fig.2

Fig.3

Fig. 4

Q0 Q1 Q2 Q3 Q4 Q5 Q6

58 60 64 68 72 70 66 62

÷2 ÷4 ÷16

C R

Fig. 5